# EUROPEAN PATENT SPECIFICATION

(11) **EP 0 622 428 B1**
(45) Date of publication and mention of the grant of the patent: **16.09.1998**
(21) Application number: 94303037.9
(22) Date of filing: 27.04.1994
(51) Int. Cl.: C09D 7/00

(54) **Paint denaturant**
Entlackungsmittel
Dénaturant pour peintures

(30) Priority: 29.04.1993 GB 9308911
(43) Date of publication of application: 02.11.1994
(73) Proprietor: BRENT INTERNATIONAL PLC, Iver, Buckinghamshire SL0 9JJ (GB)
(72) Inventor: Zoltowski, Ziegmund, High Wycombe, Buckinghamshire (GB); Cory, Michael, Kingston, Surrey KT2 5LB (GB)
(74) Representative: Jones, Helen Marjorie Meredith

(56) References cited:
- EP-A- 0 520 730
- US-A- 4 629 572
- US-A- 5 006 261

## Description

The present invention relates to a process and composition for detackifying and dispersing paint solids for example obtained from paint over spray in enclosed areas such as paint spray-booths.

In modern paint technology automatic spraying techniques are often used for painting large articles or parts of articles, for example in the automotive industry or for articles such as domestic appliances. In paint spray-booths there is a large amount of paint overspray which does not contact the article being painted and this is usually collected in water by means of a water curtain flowing through the booth or by other, similar arrangements.

Generally, the water collecting the paint overspray is recycled and in order to ensure that the process continues to work efficiently, the paint must be collected and removed from the booth water. There is therefore a need to detackify the oversprayed paint so that it can be removed easily, to enable recirculation of water through the system. Preferably, in addition, coagulation of the over-sprayed paint is promoted so that the paint solids will either float so that they can be removed from the surface of the aqueous liquid in the spray-booth, or the paint solids will sink so that they can be removed by sedimentation.

The detackifying process (also known as paint denaturing or paint killing) takes place in the water phase, by means of chemicals added to the water itself. In addition, detackification is necessary because it prevents paint fouling the internal surfaces of the booth and of pipes, which will eventually cause blockages. Collection of paint on the internal surfaces is undesirable also because paint deposits formed on the internal walls of the booth are subject to the growth of anaerobic bacteria which generate corrosive and foul-smelling substances due to anaerobic decomposition of organic substances.

Preferably a detackification composition for use in a paint spray-booth will not promote paint (or paint components) dissolution in water, as this may result in a potential water pollution problem. Preferably there should also be an anti-foaming effect to counteract undesirable foam formation inside the booth and ideally, compositions for addition to the booth water should also be sufficiently "bio-resistant" to avoid immediate biological degradation within the booth water itself.

In view of the large variety of paint and lacquer compositions which are sprayed in this type of application, preferably the detackification composition is also effective against a wide variety of coating compositions.

Because of the wide variety of properties which are needed for this type of detackification composition, the technology has not yet reached a fully satisfactory level, although there are many available detackification systems. One type of composition in wide spread use, in particular, before the 1980's, was caustic alkali based products. However, as paint technology has become more sophisticated the caustic compositions are ineffective against many modern paint compositions.

One further type of composition presently in use comprises metal salts. The metal salts are added to the booth water along with an alkali such as sodium hydroxide to maintain neutral to slightly alkaline pH as the metal salts give rise to hydroxide flocs by hydrolysis. The paint particles are then adsorbed onto the surface of the hydroxide flocs. Such systems are disadvantageous because the addition of metal ions such as zinc and aluminium poses potential pollution problems and this also produces polluted sludges.

One other type of detackification composition which is in widespread use comprises for example talc or clay comprising small particles of high surface area to which the paint can adsorb. For example US-A-2267426 describes the use of colloidal suspensions of graphite or talc for precipitation and collection of over-sprayed paint. The compositions are prepared by mixing dry talc with water to form a paste followed by the addition of linseed oil. Clay-based products, while providing a good paint killing system are sometimes considered to be disadvantageous because the small particulate nature of the clay particle makes the product difficult to handle if supplied in the dry form, and if supplied in the slurry form, the solids content is usually less than 20% and therefore relatively large amounts are required to produce the desired paint killing effect. A usual disadvantage is that complete floating or complete sinking is very difficult to achieve. The clay alone does not usually giving a definite complete flotation or sinking behaviour: following the paint density it will tend either to float or to sink, but only incompletely.

Other additives can be included in the paint denaturing composition to try to overcome this problem. One example of such a composition is described in US-A-4380495. The composition disclosed comprises clays, oils, rubbery material and foam suppressant.

Other clay-based paint denaturants are described for example in US-A-2362964 in which a mixture of clay, gum and wetting agent is used to give a detackified paint most of which is separated by sedimentation, the remainder of which must be removed separately as it floats.

One further disadvantage of clay-based compositions is that the pipes and surfaces are easily fouled as polymeric flocculants are often added in substantial amounts. In addition, clay based products do not work effectively on certain types of paints such as clear topcoats.

The use of modified clays is also known and is described in for example, US-A-4861491 which relates to the use of organophilic clays and US-A-5034136 which describes the use of clays treated by various techniques to reduce the cation exchange capacity.

Polymer based products are also used as paint denaturants. They provide good paint flotation compositions and have previously been considered unsuitable for sinking. However, they often promote foam and the paint killing is often unacceptably poor. Due to the stickiness of the polyelectrolytes which are used, the pipes and surfaces can easily be fouled. Examples of polymeric detackification compositions can be found in EP-A-293129, US-A-3515575 and US-A-4853132, and US-A-2585407.

In GB-A-2011371 an aqueous dispersion of wax is used in combination with an alkaline solution to collect paint. The wax dispersion may contain surfactants. It is added to alkaline water at pH 13.5 to form a homogeneous dispersion and then used in a paint mist wet separator, i.e. contacted with paint, where the wax particles act as a surface on which the paint can be attacked by alkali. US-A-4687520 describes a dispersion of wax with an organic amine and a non-ionic surfactant useful as a single component paint detackifier. The composition is added to water recirculating in the separator.

In US 5006261 various oil-in-water polymer latices are used as paint detackifiers by adding them to the recirculating water in a paint spray booth, optionally in the presence of water-soluble coagulants such as cationic surfactants, cationic polymers, and inorganic salts of multivalent metal ions. The paint sludge is collected by flotation.

In US-A-4750919 a method is described in which the over-sprayed paint solids are contacted with an oil-in-water emulsion until the emulsion is loaded with at least 5 parts by weight of paint solids per 100 parts by weight of the hydrocarbon liquid of the emulsion. This document describes how when used in this way the capacity of the emulsion is not exhausted. The emulsion having received the over-sprayed solids is then removed from the system and the emulsion is broken by adjusting pH. The sludge layer containing paint solids, hydrocarbon liquid, paint carrier and water is removed. The sludge-free hydrocarbon liquid and water layers are recombined with additional emulsion and recycled through the process. Thus, the emulsion remains stable throughout the process until after removal from the system with the paint solids, where it is broken for removal of the paint solids.

In EP-A-0520730 a paint denaturant is described in which an "oil-in-water" type emulsion is contacted with an aqueous solution for example in a paint spray booth and is thereby destabilised. When this process is carried out the destabilisation creates a finely dispersed suspension of a light solid in the water phase having the appearance of bulky flocs. The paint particles contact the aqueous solution comprising the destabilised oil-in-water emulsion so that the paint is absorbed onto destabilised emulsion particles. The composition is for use in flotation processes where the adsorbed paint and flocs float to the surface of the water in the spray-booth and are removed, for example, by scraping from the surface.

Combinations of the use of clays and polymeric materials are described in US-A-4629572 in which water-swellable clay and water-dispersible condensation resins which are the thermosetting resin products of reacting N-containing compounds with aldehydes, are used in combination as a paint detackifying composition. Also, in US-A-5006261, water-dispersible polymeric latexes are used as a paint detackifier and various coagulants may also be used. A mixture of clay and polyamine is described as one of the suitable coagulants but the use of this coagulant is not exemplified. As suitable polymeric latexes, a large range of polymeric materials is described, one of which is polyvinyl chloride. However, there are no specific examples of the use of polyvinyl chloride. The paint sludge produced by the process described in this reference is said to be a floating paint sludge.

At present, most of the known paint detackifying systems as described above relate to flotation processes where the paint sludge is collected on the surface of the water in a paint spray booth and removed for example by scraping from the surface. However, in various instances, a method for paint detackifying is required in which the paint can be collected by sedimentation. It has however proved rather difficult to obtain a sedimentation process with substantially 100% sedimentation. As is described above various sedimentation processes are known. However these generally lead to processes in which although a good proportion of the paint sludge can be collected by sedimentation, a portion of the paint sludge will remain floating and so both methods of separation are required. Furthermore, in particular in a sedimentation paint detackifying process it is important to detackify the paint effectively or the piping system at the base of the paint spray booth will become blocked and cleaning of the bottom of the booth and removal pipes is extremely inconvenient, taking up much time and labour.

In the present invention, a method for detackifying paint, in particular in a paint spray booth, which can be collected by sedimentation, provides efficient paint detackification and sedimentation, overcoming the problems of the prior art.

In accordance with the present invention, a process for detackifying paint is provided comprising contacting a dispersion comprising a continuous aqueous phase and a stable discontinuous hydrophobic phase comprising a polymer having a density greater than 1 g/ml and an emulsifying agent with an aqueous liquid whereby the dispersion is destabilised then contacting paint with the aqueous liquid comprising the destabilised dispersion to form paint sludge which separates from the aqueous liquid by sedimentation and collecting the sediment.

In the invention the destabilisation is preferably carried out in the presence of water - insoluble solid particles suspended in the aqueous liquid. The presence of such particles has a beneficial effect on the formation of flocs in the destabilisation process, and in particular, appears to control the size of these flocs to stop them becoming too voluminous. The solid particles may be formed in situ by mixing components which will form a precipitate of insoluble compound. For instance the solids may be water insoluble salts of multivalent metal ions formed when the multivalent metal ions in one aqueous component interact with counterions in another aqueous component to form a precipitate. The counterions may be organic or inorganic. Preferably the solid particles are included as a preformed component suspended in one of the aqueous components. Particularly preferred solids are clay particles. Clay is preferably premixed with the dispersion so that the particles of clay are suspended in the aqueous continuous phase of the dispersion.

The dispersed hydrophobic phase comprises the polymer having a high density and optionally other hydrophobic components. Within the dispersed phase the hydrophobic component(s) may be in solid or liquid form as particles or droplets surrounded by emulsifier so that the dispersed phase remains stably suspended in the continuous phase until the destabilisation step. The destabilisation takes place by providing a destabilising agent which interacts with the emulsifier so that it is no longer able to suspend the hydrophobic dispersed phase stably in the continuous aqueous environment. The particles or droplets of hydrophobic material then coagulate or agglomerate to form flocs which can easily be seen in the destabilised dispersion. These flocs then interact with particles or droplets of paint components in a paint spray booth, collecting the paint and sedimenting it in a collecting chamber from which the sediment is removed and disposed of and the supernatant can be recirculated.

The present invention has been found to be particularly effective at paint killing and a synergistic effect has been found between the water-insoluble solid particles and the water dispersed polymer flocs from the destabilised dispersion so that the paint sludge comprises easily handleable, detackified paint particles which give good sedimentation so that the paint sludge can be removed from the bottom of a tank containing the aqueous solution.

A hydrophobic phase which is suitable for use in the present invention can be any hydrophobic phase which comprises a polymer having a density greater than 1 g/ml and which can be destabilised by addition to an aqueous liquid. The hydrophobic polymer may be any polymer having the required density for example, aliphatic or aromatic polymers optionally substituted for example, with halogens such as chlorine and bromine. Preferably the hydrophobic phase is in the form of a dispersion which can comprise either solid or liquid dispersed particles of polymer, most preferably the hydrophobic phase is in the form of a latex i.e. a dispersion of hydrophobic phase in aqueous phase preferably surrounded by surfactant (emulsifier) in the dispersed phase. Preferred examples of suitable latexes are aliphatic polymers containing chlorine or bromine. In particular polymers and copolymers comprising vinyl chloride or preferably vinylidene chloride latexes are preferred. The density of the polymer must then be greater than 1.0g/ml. Preferably the density is at least 1.2, most preferably at least 1.3g/ml. Preferably the density should be no greater than 2.0g/ml most preferably no greater than 1.8g/ml.

However, the hydrophobic oil phase may also contain oil such as mineral oil or naturally occurring oil or fat generally in amounts up to 30% by weight of the hydrophobic phase. When the hydrophobic phase also comprises such additives, the oil and polymer mixture should preferably have a density greater than 1.0g/ml. In this case, preferably the density of the hydrophobic phase is at least 1.1g/ml, most preferably at least 1.2g/ml and preferably being no greater than 1.8g/ml most preferably no greater than 1.5g/ml.

The detackified paint should be carried by the liquid stream to the proper settling tank and should not precipitate in other places of the booth. For this reason, the flocs settling rate should not be too quick; this is obtained with only two factors: floc size and floc density. The former is controlled by the chemical composition of the detackifier (insoluble solids ratio to polymer etc). Floc density is mainly controlled by the density of the polymer. The clay or other solid particles are included in the process to control the floc size. Without it, the floc size of the liquid phase tends to be too large, leading to insufficient contact with the paint overspray and too rapid settling.

A clay which is included in the composition can be any clay or mixture of clay. Preferred examples are one or more that are water-swellable clay selected from kaolin (china clay), talc, diatomaceous earth, bentonite, or modified clays such as those described in US-A-5034136 and US-A-4861491. Preferably, the clay comprises a mixture of several clays. It has been found that the most preferred clay composition for incorporation into the composition comprises bentonite, preferably in an amount of from 19 to 60% by weight of the dry mixture of clays, most preferably from 30 to 50% by weight. It has also been found that a preferred clay mixture comprises a mixture of talc, kaolin, diatomaceous earth and bentonite. Preferably the amount of talc in the mixture will be from 1 to 20% by weight, most preferably from 5 to 10% by weight. Kaolin and diatomaceous earth are preferably present in approximately equal amounts in the mixture generally in amounts of from 5 to 40% by weight preferably in amounts of from 10 to 30% by weight.

In the present invention there is also provided a stable dispersion comprising a continuous aqueous phase, a discontinuous hydrophobic phase comprising polymer having a density greater than 1.0g/ml, which is a polymer or copolymer of vinyl chloride or vinylidene chloride and is present in an amount in the range 5 to 50% by weight of the composition, an anionic emulsifying agent for the hydrophobic phase and suspended particles of water-insoluble material, comprising clay, in which the weight ratio of hydrophobic phase to suspended particulate material is in the range 10:1 to 1:10.

The amount of polymer in the composition may vary but is at least 5% by weight, preferably at least 10% by weight and most preferably at least 12% by weight. The amount of polymer in the composition is no greater than 50% by weight, preferably no greater than 40% by weight and most preferably no greater than 25% by weight of the total composition.

In the preferred compositions for use in the invention, in the dispersion of hydrophobic phase in aqueous liquid which is included in the composition for addition to the paint booth water, preferably the ratio of oil phase to aqueous phase in the emulsion is from 1:10 to 5:1, most preferably 1:5 to 2:1.

Generally the clay will be incorporated into the composition in the form of a slurry comprising up to 20% dry solids in water or other aqueous liquid. The ratio of total amount of dry solids of clay in the composition to hydrophobic phase is generally in the region of 1:5 to 5:1, preferably in the region of 1:3 to 3:1.

The emulsifying agent can be any emulsifying agent which is capable of forming a relatively stable dispersion with the non-aqueous phase described above and which will enable the dispersion to be destabilised. Preferably the emulsifier is water-soluble and ionic so that destabilisation of the dispersion can take place by contact with ions of the opposite charge in an amount sufficient to reduce the activity of the emulsifying agent to destabilise the emulsion in the aqueous liquid in the spray-booth.

The preferred emulsifiers are anionic in nature so that they can be destabilised by the action of a metal ion to provide an insoluble salt. Preferably the anionic emulsifier will form an insoluble salt with calcium and/or magnesium ions and most preferably these are provided by natural water hardness of normal tap water. Where the water hardness is too low to produce the required result or where a different metal ion is required, possible metal salts to be used as sources of metal ions are for example sulphate, chloride, nitrate, acetate of calcium, aluminium, magnesium or iron. Any other metal salt which is water soluble and whose cation gives an insoluble salt with the selected anionic emulsifier can also be used although obviously, it is preferred to use a metal which is not considered to produce water pollution or pollution of the sludge. Thus, water hardness is the preferred source of suitable metal ions.

Examples of preferred anionic emulsifiers are fatty acid salts of alkali metals, or of alkanolamines (soaps) or petroleum sulphonate salts of alkali metals or alkanolamines.

Alternatively, the dispersion destabilisation can be achieved by the use of a cationic emulsifier and/or a cationic polymer to destabilise an anionic emulsifier in the emulsion. Any cationic emulsifier or polymer which will destabilise the anionic emulsifier in the emulsion is suitable but nitrogen containing destabilisation polymers could be disadvantageous due to the nitrogen content which could be a potential nutrient for bacterial growth. Detackification and dispersion of paint can however be effective using this type of composition.

Alternatively, the emulsifying agent for the dispersion can be cationic, for example a quaternary ammonium compound. When this type of emulsifying agent is used, destabilisation can be effected by the addition of anionic substances for example, anionic polymers, soaps or anionic surfactants.

The dispersion can also be destabilised by any other method. For example, in particular where the emulsion is stabilised using an anionic surfactant, the pH of the aqueous liquid in the spray-booth will generally be from 6.0 to 9.0. In order to destabilise the dispersion the pH should be lowered by at least 0.5 units to at least pH 5.5, preferably to a pH of from 3.5 to 4.0. pH below 3.5 will produce effective destabilisation but is undesirable as it may lead to corrosion problems.

The emulsifying agent should be present in the emulsion in a quantity sufficient to provide a stable emulsion which can be destabilised in the aqueous liquid in the paint spray-booth. Generally, the weight ratio of the oil phase to emulsifying agent is in the range of from 5:95 to 99:1, preferably in the range 15:1 to 1:1.

Other optional ingredients in the composition may be for example an additional emulsifier, for example nonionic, anionic, or cationic emulsifier, preferably anionic emulsifiers such as petroleum sulphonate having an average molecular weight of 400-600, additional oils which may aid detackification such as heavy olefinic oils which may be added up to a weight percentage of the total composition of preferably no greater than 10%, most preferably no greater than 7.5% by weight. Other additives may be for example viscosity modifiers, viscosity stabilisers, biocides and foam suppressants.

Preferably the composition is in the form of a mixture of dispersion of hydrophobic phase in a continuous aqueous phase and clay.

The composition should be prepared by firstly adding clay and any other inorganic products to water to form a slurry and secondly by adding the slurry to the oil-in- water system which is in the form of either a dispersion or an emulsion.

Where the composition contains additional oil, firstly the oil and additional emulsifier are added to water and any solid particulate material, for instance the clay is then added usually as an aqueous slurry to form an even dispersion. This is subsequently mixed with the polymer dispersion. Any remaining additives may be added at any stage for example either into the solid particulate slurry or into the final dispersion.

The composition is then added into the liquid in the spray booth at relatively low levels of for example around 0.4 to 10 kg/m³.

As described above, the destabiliser in the aqueous liquid may be various additives which may already be present in the aqueous liquid or may be added as a separate component. The water hardness may be sufficient to destabilise the hydrophobic phase when anionic emulsifiers are used: a water hardness of around 200ppm (expressed as calcium carbonate) will often be sufficient.

The destabilising additive, if needed, should be present in the aqueous liquid in an amount sufficient to cause destabilisation of the emulsion, so as to turn the hydrophobic phase into voluminous flocs.

The composition according to the present invention is also advantageous in that previously, clay-based paint denaturants have had associated difficulties because the viscosity of clay slurries is very high and even at a concentration lower than 20% by weight dry solids, pumping difficulties have been experienced. In the composition of the present invention, this problem is alleviated as the composition has rather reduced viscosity.

The compositions of this invention provide paint killing which is sufficiently effective in terms of detackification that detackified paint can be pressure filtered for removal from the system. Other processes in the prior art may result in (incomplete) sedimentation of the paint sludge; however for example when pressure filtered at a pressure of around 3 atmospheres, the sludges often tend to become sticky and their handleability deteriorates. The present invention results in detackification sufficient to enable pressure filtering of the sedimented paint solids at pressures of, for example up to 3 atmospheres.

The present invention is now described in more detail with reference to the accompanying examples.

A laboratory test rig was set up to simulate a paint spray booth.

### Example 1

A clay slurry has been prepared as follows:

| | |
|---|---|
| Talc | 1.8% |
| Bentonite | 9.0% |
| Kaolin | 4.6% |
| Diatomaceous earth | 4.6% |
| Water | 80% |

### Example 2

A composition for paint detackification has been prepared as follows:

| | |
|---|---|
| Tap water | 9% |
| Vinylidene chloride containing copolymer emulsion 50% active, specific gravity of the emulsion 1.29 (Diofan 233 D from BASF) | 25% |
| Clay slurry (Example 1) | 60% |
| Heavy olefinic oil | 4.5% |
| Anionic emulsifier (petroleum sulphonate average molecular weight 450) | 1.5% |

The composition was prepared by mixing the oil and petroleum sulphonate with a portion of water to form a dispersion of oil in aqueous liquid. The talc, bentonite, kaolin and diatomaceous earth were mixed and formed into a slurry as in Example 1 which was added to the dispersion of oil and emulsifier in water. The polymer emulsion was then added to the mixture.

### Example 3

A laboratory testing apparatus paint spray booth simulator was set up. A liquid/air type spray nozzle was used, giving a throughput of approximately 1ml/min with an air pressure of 2 bars.

The overall capacity of the model booth was 13 liters. A circulation pump was set to have a continuous liquid layer following along a slope of the model spray booth. A mesh filter was provided to prevent the paint sludge being carried over to foul the pipes and the pump.

To carry out a run, the detackification composition was added to the booth, the pump was started, then the detackifying composition was added to the model booth's water when necessary and the pump left running approximately 2 hours. Then 30ml paint were sprayed, in 30 minutes time, the pump left running for approximately another 30 minutes and then stopped and the results evaluated as follows:
1) Dispersion - A visual evaluation of the dispersion of the paint has been given, i.e. the tendency to remain in small individual particles.
2) Detackification - Has been evaluated as the tendency of the paint sludge, when gently rubbed between finger, to smear the skin.
3) Sinkage vs flotation - The paint floating in the booth has been collected, dried in an oven at 105°C and weighed. Then compared to the total amount of dry paint (plus detackifier) added
4) Foam - A visual evaluation of the amount of foam developed on the surfaces of the booth has been given, when the pump was running.
5) Stickiness to walls - A visual evaluation has been given of the amount of material left on the walls and on the mesh filter, after the model booth has been drained.

The paint used was a standard flame red acrylic medium solid top coat, found to be a paint which is difficult to detackify properly.

The water hardness in all cases was 280 ppm expressed as calcium carbonate.

### Example 4

2g/l of the composition reported in Example 2 was added to the model spray booth followed by 0.05 g/l of a quaternary ammonium compound as a destabiliser (dimethyl didecyl ammonium chloride). The procedure reported in Example 3 was followed.

Results were as follows:

| | | |
|---|---|---|
| 1) | Dispersion | fair to good |
| 2) | Detackification | very good |
| 3) | % sinkage | 90% approx. |
| 4) | Foam | some, rapid collapsing |
| 5) | stickiness to walls | none to very slight |

### Example 5

2g/l of the composition reported in Example 2 were added to the model spray booth, followed by 0.05g/l of aluminium acetate.

Following the procedure described in Example 3, the results were:

| | |
|---|---|
| Dispersion | fair to good |
| Detackification | very good |
| Foam | none |
| % sinkage | 95% approx. |
| Stickiness to walls | none |

### Example 6

A composition as reported in Example 2 was prepared using a different polymer emulsion containing vinylidene chloride copolymer, 50% active, specific gravity of emulsion 1.28 (Kurofan 208D from BASF).

2 g/l of this composition were added to the model spray booth, being the water hardness salts sufficient for destabilisation and the procedure described in Example 3 was followed.

The results were:

| | |
|---|---|
| Dispersion | good to very good |
| Detackification | very good |
| Foam | none |
| % sinkage | over 95% |
| Stickiness to walls | very slight |

### Example 7 (comparative example)

2g/l of the composition, as reported in Example 2 was added to the model booth, and the procedure described in Example 3 was followed, using demineralised water instead of tap water, and with no addition of destabilisers.

Results were:

| | |
|---|---|
| Dispersion | very poor |
| Detackification | very poor |
| % sinkage | less than 5% |
| Foam | a persistent blanket |
| Stickiness to walls | very sticky |

### Example 8

This example is reported to document the effect of an insoluble material (aluminum hydroxide) different from clay on the size of the flocs produced by destabilisation of the polyvinylidene chloride based latex.

A 1 liter beaker was filled with tap water (water hardness 280 ppm, expressed as calcium carbonate), than 200 mg of aluminium chlorohydrate 50% solution were added, and the pH raised to 7.5 by addition of few drops of sodium hydroxide, 1 M solution. The resulting solution was stirred for 1 minute and aluminium hydroxide flocs became visible. Than 1 ml of polyvinylidene chloride based emulsion (Diophan 233 D) was added to the beaker. The emulsion immediately turned into small voluminous flocs. Under stirring, 1.5ml of standard flame red acrylic medium solid top coat paint were added dropwise, the solution left under stirring 3 minutes, than left standing further 5 minutes. The results were evaluated as in Example 3, and were found as follows:

| | | |
|---|---|---|
| 1) | Dispersion | good |
| 2) | Detackification | very good |
| 3) | % sinkage | approx 95% |
| 4) | Foam | some, unstable |
| 5) | Stickiness to stirrer | none |

### Example 9 (comparative example)

This example is reported to compare the floc size of the destabilised polymer emulsion when destabilisation is effected without any soluble particle in suspension.

A 1 liter beaker was filled with tap water, than 50mg of dimethyldidecylammonium chloride (as in Example 4) were added, the solution was stirred 1 minute and 1 ml of polyvinylidene chloride based emulsion (Diophan 233D) was added to the beaker. Under stirring, 1.5ml of the red paint were added dropwise, the solution left under stirring 3 minutes and than left standing further 5 minutes. The results were:

| | | |
|---|---|---|
| 1) | Dispersion | very bad (few big lumps of polymer/paint developed) |
| 2) | Detackification | very good |
| 3) | % sinkage | 100% |
| 4) | Foam | some, instable |
| 5) | Stickiness to stirrer | some |

## Claims

1. A process for detackifying paint comprising contacting a stable dispersion comprising a continuous aqueous phase, a discontinuous hydrophobic phase comprising a polymer having a density greater than 1.0g/ml and an emulsifying agent with an aqueous liquid whereby the dispersion is destabilised then contacting paint with the aqueous liquid comprising the destabilised dispersion to form paint sludge which separates from the aqueous liquid by sedimentation and collecting the sludge.

2. A process according to claim 1 in which the destabilisation is carried out in the presence of suspended particles of water-insoluble solids which are preferably inorganic, most preferably comprising clay particles.

3. A process according to any preceding claim in which the polymer has a density of at least 1.2g/ml, preferably at least 1.3g/ml, more preferably at least 1.5g/ml.

4. A process according to any preceding claim in which destabilisation of the dispersion is effected by reducing the activity of the emulsifying agent.

5. A process according to claim 4 in which the emulsifier is water-soluble and ionic and destabilisation takes place by contact with ions of the opposite charge to the emulsifier in an amount sufficient to destabilise the dispersion.

6. A process according to claim 5 in which the dispersion comprises an anionic emulsifying agent which will form an insoluble salt with a multivalent metal ion, preferably selected from calcium, aluminium and magnesium ions, and the aqueous liquid comprises multivalent metal ions in an amount sufficient to form an insoluble salt with the anionic emulsifying agent.

7. A process according to claim 6 in which the aqueous solution is tap water of which the water hardness provides said metal ions.

8. A process according to claim 5 in which the emulsifying agent is anionic and destabilisation is effected by contact with a cationic emulsifying agent and/or a cationic polymer in the aqueous solution.

9. A process according to claim 5 in which the emulsifying agent is anionic and the dispersion is destabilised by lowering the pH by at least 0.5 units.

10. A process according to any preceding claim in which the hydrophobic phase comprises a chlorine or bromine containing polymer, preferably a polymer or copolymer of vinyl chloride, or preferably vinylidene chloride.

11. A stable dispersion comprising a continuous aqueous phase, a discontinuous hydrophobic phase comprising polymer having a density greater than 1.0g/ml, which is a polymer or copolymer of vinyl chloride or vinylidene chloride and is present in an amount in the range 5 to 50% by weight of the composition, an anionic emulsifying agent for the hydrophobic phase and suspended particles of water-insoluble material comprising clay, in which the weight ratio of hydrophobic phase to suspended particulate material is in the range 10:1 to 1:10.

12. A dispersion according to claim 11 in which the ratio of hydrophobic phase to suspended particulate material is in the range 6:1 to 2:5, preferably approximately 4:3.

13. A process of preparing a composition according to claim 11 or claim 12 comprising adding the emulsifier to a first aqueous composition, adding to the aqueous mixture formed an aqueous slurry of the insoluble particulate material and subsequently adding the polymer to form the hydrophobic dispersed phase.

14. Use of a dispersion according to claim 11 or claim 12 as a paint denaturant, preferably in a paint sedimentation process.

## Patentansprüche

1. Verfahren zur Beseitigung der Klebrigkeit von Lack, umfassend das Kontaktieren einer stabilen Dispersion, welche eine kontinuierliche wäßrige Phase, eine ein Polymer mit einer Dichte von mehr als 1,0 g/ml umfassende diskontinuierliche hydrophobe Phase und einen Emulgator umfaßt, mit einer wäßrigen Flüssigkeit, wodurch die Dispersion destabilisiert wird, dann Kontaktieren von Lack mit der die destabilisierte Dispersion umfassenden wäßrigen Flüssigkeit unter Bildung eines Lackschlammes, der sich durch Sedimentation aus der wäßrigen Flüssigkeit abscheidet, und Sammeln des Schlammes.

2. Verfahren nach Anspruch 1, worin die Destabilisierung in Gegenwart von suspendierten Teilchen von wasserunlöslichen Feststoffen, die vorzugsweise anorganisch sind, wobei sie am meisten bevorzugt Tonteilchen umfassen, durchgeführt wird.

3. Verfahren nach irgendeinem vorhergehenden Anspruch, worin das Polymer eine Dichte von mindestens 1,2 g/ml, vorzugsweise mindestens 1,3 g/ml, noch mehr bevorzugt mindestens 1,5 g/ml, aufweist.

4. Verfahren nach irgendeinem vorhergehenden Anspruch, worin die Destabilisierung der Dispersion durch Verringerung der Aktivität des Emulgators erfolgt.

5. Verfahren nach Anspruch 4, worin der Emulgator wasserlöslich und ionisch ist und die Destabilisierung durch Kontakt mit lonen mit entgegengesetzter Ladung zu dem Emulgator in einer Menge, die ausreicht, um die Dispersion zu destabilisieren, stattfindet.

6. Verfahren nach Anspruch 5, worin die Dispersion einen anionischen Emulgator umfaßt, der mit einem mehrwertigen Metallion, das vorzugsweise aus Calcium-, Aluminium- und Magnesium-lonen ausgewählt wird, ein unlösliches Salz bildet, und die wäßrige Flüssigkeit mehrwertige Metallionen in einer Menge, die ausreicht, um mit dem anionischen Emulgator ein unlösliches Salz zu bilden, umfaßt.

7. Verfahren nach Anspruch 6, worin die wäßrige Lösung Leitungswasser ist, dessen Wasserhärte die Metallionen liefert.

8. Verfahren nach Anspruch 5, worin der Emulgator anionisch ist und die Destabilisierung durch Kontakt mit einem kationischen Emulgator und/oder einem kationischen Polymer in der wäßrigen Lösung erfolgt.

9. Verfahren nach Anspruch 5, worin der Emulgator anionisch ist und die Dispersion durch Senken des pH um mindestens 0,5 Einheiten destabilisiert wird.

10. Verfahren nach irgendeinem vorhergehenden Anspruch, worin die hydrophobe Phase ein Chlor- oder Brom-haltiges Polymer, vorzugsweise ein Polymer oder Copolymer von Vinylchlorid, oder vorzugsweise Vinylidenchlorid, umfaßt.

11. Stabile Dispersion, welche eine kontinuierliche wäßrige Phase, eine Polymer mit einer Dichte von mehr als 1,0 g/ml, bei welchem es sich um ein Polymer oder Copolymer von Vinylchlorid oder Vinylidenchlorid handelt und welches in einer Menge im Bereich von 5 bis 50 Gew.-% der Zusammensetzung vorhanden ist, umfassende diskontinuierliche hydrophobe Phase, einen anionischen Emulgator für die hydrophobe Phase und suspendierte Teilchen von Ton umfassendem unlöslichem Material umfaßt, worin das Gewichtsverhältnis von hydrophober Phase zu suspendiertem teilchenförmigem Material im Bereich von 10:1 bis 1:10 liegt.

12. Dispersion nach Anspruch 11, worin das Verhältnis von hydrophober Phase zu suspendiertem teilchenförmigem Material im Bereich von 6:1 bis 2:5, vorzugsweise bei etwa 4:3, liegt.

13. Verfahren zur Herstellung einer Zusammensetzung nach Anspruch 11 oder Anspruch 12, umfassend Zugabe des Emulgators zu einer ersten wäßrigen Zusammensetzung, Zugabe einer wäßrigen Aufschlämmung des unlöslichen teilchenförmigen Materials zu der gebildeten wäßrigen Mischung und anschließende Zugabe des Polymers unter Bildung der hydrophoben dispergierten Phase.

14. Verwendung einer Dispersion nach Anspruch 11 oder Anspruch 12 als Lack-Denaturierungsmittel, vorzugsweise in einem Lack-Sedimentationsverfahren.

## Revendications

1. Procédé pour décoller de la peinture comprenant les étapes consistant à mettre une dispersion stable comprenant une phase aqueuse continue, une phase hydrophobe discontinue comprenant un polymère ayant une densité supérieure à 1,0 g/ml et un agent émulsionnant en contact avec un liquide aqueux, la dispersion étant par là déstabilisée, à mettre ensuite la peinture en contact avec le liquide aqueux comprenant la dispersion déstabilisée pour former une suspension de peinture qui se sépare du liquide aqueux par sédimentation et à recueillir la suspension.

2. Procédé selon la revendication 1, dans lequel la déstabilisation est réalisée en présence de particules mises en suspension de matières solides insolubles dans l'eau qui sont de préférence inorganiques, comprenant encore mieux des particules d'argile.

3. Procédé selon l'une quelconque des revendications précédentes, dans lequel le polymère a une densité d'au moins 1,2 g/ml, de préférence d'au moins 1,3 g/ml, encore mieux d'au moins 1,5 g/ml.

4. Procédé selon l'une quelconque des revendications précédentes, dans lequel la déstabilisation de la dispersion est réalisée par réduction de l'activité de l'agent émulsionnant.

5. Procédé selon la revendication 4, dans lequel l'agent émulsionnant est soluble dans l'eau et ionique et la déstabilisation a lieu par contact avec des ions de la charge opposée à l'agent émulsionnant dans une quantité suffisante pour déstabiliser la dispersion.

6. Procédé selon la revendication 5, dans lequel la dispersion comprend un agent émulsionnant anionique qui formera un sel insoluble avec un ion métallique polyvalent, de préférence choisi parmi les ions calcium, aluminium et magnésium, et le liquide aqueux comprend des ions métalliques polyvalents dans une quantité suffisante pour former un sel insoluble avec l'agent émulsionnant anionique.

7. Procédé selon la revendication 6, dans lequel la solution aqueuse est de l'eau courante dont la dureté de l'eau fournit lesdits ions métalliques.

8. Procédé selon la revendication 5, dans lequel l'agent émulsionnant est anionique et la déstabilisation est réalisée par contact avec un agent émulsionnant cationique et/ou un polymère cationique dans la solution aqueuse.

9. Procédé selon la revendication 5, dans lequel l'agent émulsionnant est anionique et la dispersion est déstabilisée par abaissement du pH d'au moins 0,5 unité.

10. Procédé selon l'une quelconque des revendications précédentes, dans lequel la phase hydrophobe comprend un polymère contenant du chlore ou du brome, de préférence un polymère ou un copolymère de chlorure de vinyle ou de préférence de chlorure de vinylidène.

11. Dispersion stable comprenant une phase aqueuse continue, une phase hydrophobe discontinue comprenant un polymère ayant une densité supérieure à 1,0 g/ml qui est un polymère ou un copolymère de chlorure de vinyle ou de chlorure de vinylidène et qui est présent dans une quantité dans l'intervalle de 5 à 50% en poids de la composition, un agent émulsionnant anionique pour la phase hydrophobe et des particules mises en suspension de matière insoluble dans l'eau comprenant de l'argile, dans laquelle le rapport massique de la phase hydrophobe à la matière particulaire mise en suspension est dans l'intervalle de 10 : 1 à 1:10.

12. Dispersion selon la revendication 11, dans laquelle le rapport de la phase hydrophobe à la matière particulaire mise en suspension est dans l'intervalle de 6 : 1 à 2 : 5, de préférence d'approximativement 4 :3.

13. Procédé de préparation d'une composition selon la revendication 11 ou la revendication 12 comprenant l'addition de l'agent émulsionnant à une première composition aqueuse, l'addition au mélange aqueux formé d'une suspension aqueuse de la matière particulaire insoluble et l'addition subséquente du polymère pour former la phase dispersée hydrophobe.

14. Utilisation d'une dispersion selon la revendication 11 ou la revendication 12 comme un agent dénaturant la peinture, de préférence dans un procédé de sédimentation de peinture.
